## Europäisches Patentamt

## European Patent Office

## Office européen des brevets

(11) Numéro de publication: **0 219 397**
**B1**

(19)

(12) **FASCICULE DE BREVET EUROPÉEN**

(45) Date de publication du fascicule du brevet:
**23.11.88**

(21) Numéro de dépôt: **86402067.2**

(22) Date de dépôt: **19.09.86**

(51) Int. Cl.⁴: **B 65 G 19/02,** B 65 G 9/00, B 65 G 47/64

(54) **Dispositif d'aiguillage dirigeant vers un poste intermédiaire un élément porteur de pièce déplacé le long d'un transporteur général.**

(30) Priorité: **26.09.85 FR 8514269**

(43) Date de publication de la demande:
**22.04.87 Bulletin 87/17**

(45) Mention de la délivrance du brevet:
**23.11.88 Bulletin 88/47**

(84) Etats contractants désignés:
**DE GB SE**

(56) Documents cité:
**EP-A-0 153 201**
**GB-A-813 769**
**US-A-3 247 952**

(73) Titulaire: **JICE AUTOMATION, Zone Industrielle Pierre Brune, F-85110 Chantonnay (FR)**

(72) Inventeur: **Cousseau, Joseph, Avenue du 25 Août, F-79140 Cerizay (FR)**

(74) Mandataire: **Chevallier, Robert Marie Georges, Cabinet BOETTCHER 23, rue La Boétie, F-75008 Paris (FR)**

LIBER, STOCKHOLM 1988

## Description

L'invention a pour objet un dispositif d'aiguillage dont le rôle est de diriger sélectivement vers un poste intermédiaire tel qu'un poste de travail ou un poste d'attente, un élément porteur quelconque déterminé portant une ou plusieurs pièces à travailler et faisant partie d'un ensemble d'éléments porteurs qui sont déplacés les uns à la suite des autres le long d'un transporteur général.

Dans une installation connue, par exemple telle que celle décrite dans le document EP-A-0 153 201, chaque poste intermédiaire est installé à un niveau inférieur au niveau du transporteur général sur une ligne de dérivation qui comprend un tronçon descendant en amont du poste intermédiaire et un tronçon montant en aval du poste intermédiaire. Sur le tronçon descendant, les éléments porteurs descendent sous l'effet de la gravité pour parvenir au poste intermédiaire. Un dispositif d'aiguillage qui est commandé sélectivement est prévu entre le transporteur général et la partie extrême supérieure du tronçon descendant afin de faire sortir du transporteur général un élément porteur choisi qui est déplacé sur ce dernier et de le faire passer sur le tronçon descendant de la ligne de dérivation. Sur le transporteur général, les éléments porteurs sont guidés par un rail qu'ils doivent quitter pour passer sur la ligne de dérivation.

Le but principal de l'invention est d'apporter un dispositif de dérivation qui assure la double fonction de faire sortir les éléments porteurs du transporteur général et de les guider jusqu'à la ligne de dérivation, avec une grande sûreté de marche et à l'aide de pièces peu coûteuses faciles à réaliser économiquement.

L'invention part d'un dispositif de dérivation selon le préambule de la revendication 1. L'invention - dans un premier aspect - se distingue de ce dispositif connu per les caractéristiques de la deuxième partie de la revendication 1. Dans un deuxième aspect, l'invention est define par la combinaison des caractéristiques des revendications 1 et 3. Les revendications dépendantes 2 et 4 concernent des modes particuliers de réalisation de cette invention.

Pour bien faire comprendre l'invention, on donnera maintenant une description d'un exemple préféré de réalisation. On se reportera aux dessins annexés dans lesquels:

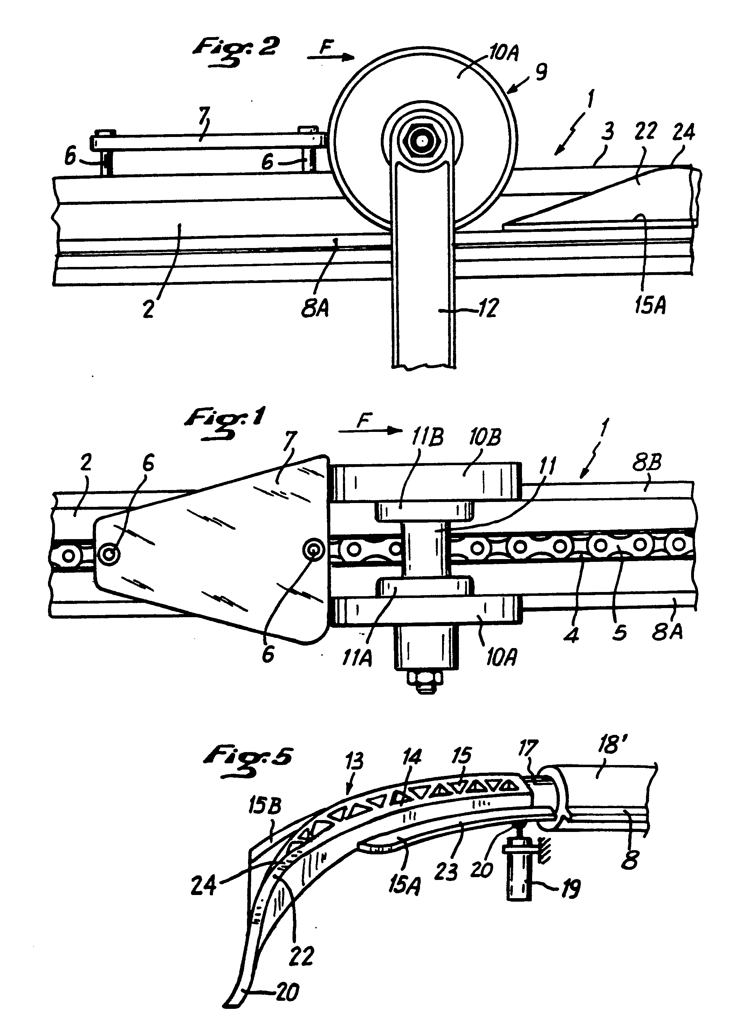

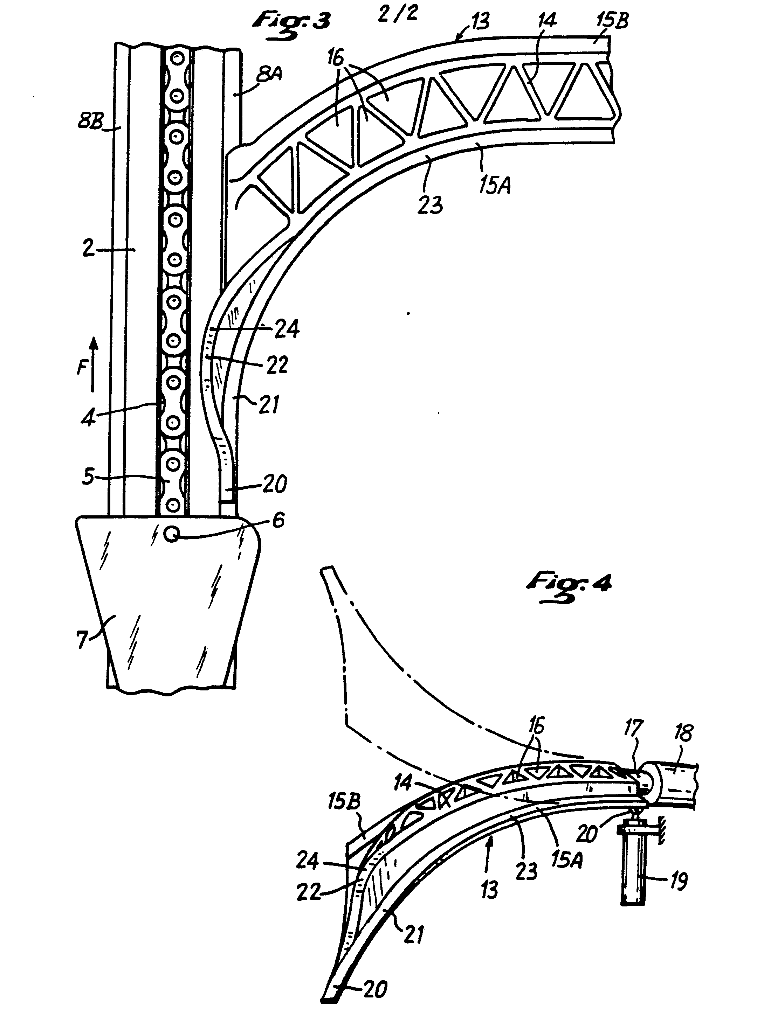

. la figure 1 est une vue de dessus d'un rail de guidage qui fait partie d'un transporteur principal avec un organe de poussée agissant sur un élément porteur de pièces pour déplacer ce dernier;
. la figure 2 est une vue en élévation du rail de guidage de la figure 1 avec une partie d'une lame d'aiguillage représentée en aval de l'élément porteur;
. la figure 3 est une vue de dessus analogue à la figure 1, mais l'élément porteur a été omis et la lame d'aiguillage est représentée en position d'activité;
. la figure 4 est une vue générale en perspective du dispositif d'aiguillage de l'invention représenté sans le rail de guidage du circuit principal et avec la partie extrême du tronçon descendant de la ligne de dérivation associée à un poste intermédiaire;
. la figure 5 est une vue analogue à la figure 4 montrant une variante de réalisation du dispositif d'aiguillage de l'invention.

Les figures 1 et 2 montrent un tronçon d'un transporteur général 1 qui comprend un rail de guidage 2 supporté horizontalement au-dessus du sol à l'aide de moyens appropriés non représentés de préférence le long d'un circuit fermé sur lui-même. Ce rail de guidage 2 a un sommet 3 qui s'étend longitudinalement et dans lequel est prévue une fente longitudinale. Ce rail 2 est creux et il contient une chaîne sans fin 5 entraînée en déplacement continu dans le sens indiqué par une flèche F. A des endroits espacés sont fixés à la chaîne 5, des supports 6 qui s'étendent vers le haut à travers la fente 4 au-dessus du sommet 3 pour porter un organe de poussée 7. Le rail de guidage 2 est pourvu sur ses deux côtés opposés d'ailes latérales opposées horizontales 8A, 8B. Ces dernières servent de chemin de roulement à une multitude d'éléments porteurs 9 dont un seul est représenté sur la figure 1. Chacun des éléments porteurs 9 comprend deux roues 10A, 10B montées sur un axe 11 transversal au rail de guidage 2 et espacées de façon à rouler chacune respectivement sur une aile latérale 8A, 8B, l'axe 11 passant alors au-dessus du sommet 3 du rail de guidage 2 sans le toucher.

A partir de l'axe 11, extérieurement aux roues 10A, 10B, une tige porteuse 12 s'étend vers le bas pour porter, de façon bien connue, des pièces à travailler, par exemple des pièces d'un vêtement à confectionner. Des postes de travail successifs sont disposés sur le côté du transporteur général 1. Des lignes de dérivation partent du rail de guidage 2, avec un tronçon descendant jusqu'au niveau du poste de travail; ensuite, il existe un tronçon montant qui permet de faire remonter les éléments porteurs 9 sur le transporteur général 1.

Toutes les pièces à travailler suspendues aux éléments porteurs 9 ne passent pas nécessairement à tous les postes de travail successifs. Il existe donc, en relation avec chaque poste de travail, un dispositif de dérivation qui permet de faire passer sélectivement à un poste de travail déterminé, un élément porteur 9 quelconque choisi.

Chaque dispositif de dérivation comprend une lame d'aiguillage 13 (figures 3 à 5) qui a un corps 14 incurvé avec deux pistes latérales 15A, 15B situées sur deux côtés opposés. Ces pistes 15A, 15B sont séparées par un écartement qui est égal à la largeur du corps 14 et qui a la même valeur que l'écartement des deux ailes latérales opposées 8A, 8B du rail de guidage 2. Dans cet exemple, le corps 14 est traversé dans son épaisseur par des ouvertures 16 pour une raison d'allégement.

La lame d'aiguillage 13 est pourvue, de préférence à son extrémité éloignée du rail de guidage 2, dans le prolongement du corps 14, d'un axe d'articulation 17. Cette disposition est avantageuse parce qu'elle permet de loger cet axe 17 en sens axial dans la partie terminale creuse du tronçon descendant 18 qui fait partie de la ligne de dérivation d'un poste de travail. La figure 4 montre que ce tronçon descendant 18 peut être constitué par un tube; la figure 5 montre que le tronçon descendant 18' peut être constitué par un rail de guidage creux analogue au rail de guidage 2 avec deux ailes latérales 8.

Un vérin 19 est supporté à proximité de l'axe 17 et il est attelé à la lame d'aiguillage 13, en un point 20 déporté latéralement par rapport à la direction de l'axe 17. Ce vérin 19 permet de faire pivoter l'ensemble de la lame d'aiguillage 13 par rapport au tronçon descendant 18, entre une position de service visible sur la figure 3 et une position de repos.

Quand la lame d'aiguillage est mise à sa position de service, elle repose par son extrémité libre opposée à l'axe d'articulation 17 sur l'aile 18A du rail de guidage 2. Dans le sens F du déplacement des organes de poussée 7, il existe alors une piste latérale 15A qui est en amont par rapport à l'autre piste latérale 15B. Cette dernière située en aval s'étend en totalité dans un même plan, avec la même incurvation que le corps 14, entre l'aile 8A du rail de guidage 2 et le tronçon descendant 18, à proximité de laquelle elle s'interrompt, en avant de l'axe d'articulation 17. La piste latérale amont 15A présente une première partie extrême libre 20 destinée à reposer sur l'aile latérale 8A, une deuxième partie 21 qui est longée du côté du rail de guidage 2 par une paroi de déraillement 22, et une troisième partie 23 qui est parallèle à la piste latérale 15B située en aval.

Plusieurs variantes de détail sont possibles dans la réalisation de la piste latérale amont 15A et de la paroi de déraillement 22. Sur la figure 3, la paroi de déraillement 22 se raccorde avec le corps 14 au début de la troisième partie 23 de la piste latérale 15A. Sur la figure 4, la paroi de déraillement 22 fait partie intégrante du corps 14 par lequel elle est prolongée à un niveau supérieur à celui des pistes latérales 15A, 15B. Sur la figure 5, la paroi de déraillement 22 fait partie du corps 14 comme sur la figure 4, mais la deuxième partie 21 de la piste latérale 15A a été supprimée substantiellement dans la région de la paroi de déraillement 22.

Dans tous les cas, la paroi de déraillement 22 est plus proche du rail de guidage 2 que la piste latérale amont 15A, en position d'activité de la lame d'aiguillage 13, et elle s'élève progressivement jusqu'à un sommet 24 dont le niveau est déterminé comme on l'expliquera plus loin.

Le fonctionnement du dispositif de dérivation que l'on vient de décrire est le suivant.

Quand un organe de poussée 7 pousse un élément porteur 9 (figures 1 et 2), qui doit être dérivé à un poste de travail, la lame d'aiguillage 13 est abaissée par le vérin 19 à sa position d'activité (figure 3 où l'élément porteur 9 n'a pas été représenté pour la clarté du dessin). La roue 10A monte sur la première partie 20 de la piste latérale amont 15A; elle ne peut pas rouler sur la paroi de déraillement 22 parce que la roue opposée 10B repose sur l'aile opposée 8B et cette roue 10B est retenue en sens transversal par le rail de guidage 2. L'axe 11 est donc soulevé par la paroi de déraillement 22 jusqu'au sommet 24 de celle-ci. A cette position, la roue 10A est soulevée et retenue en sens transversal par la paroi de soulèvement dressée 22 plus fortement que la roue opposée 10B n'est retenue par le rail de guidage 2. Sous la poussée de l'organe de poussée 7, cette roue opposée 10B est obligée de monter sur le rail de guidage 2 et de franchir le sommet 3 de ce dernier. Cette roue opposée 10B descend ensuite jusque sur la piste latérale 15B située en aval. A ce moment, l'axe 11 finit de descendre de la paroi de déraillement 22 et la roue 10A arrive sur la troisième partie 23 de la piste latérale amont 15A. Ceci explique pourquoi la deuxième partie 21 de cette piste 15A peut être supprimée: elle n'est pas utilisée tant que la paroi de déraillement 22 soulève l'élément porteur 9.

Quand le déraillement par rapport au rail de guidage 2 a eu lieu et que les deux roues 10A, 10B sont arrivées sur les pistes latérales 15A, 15B de la lame d'aiguillage 13, l'organe de poussée 7 qui est suffisamment large en sens transversal est arrivé jusqu'au début de la piste latérale 15B située en aval et il pousse encore la roue 10B. Ensuite, l'ensemble du dispositif de dérivation et du tronçon descendant 18 étant en pente vers le bas, l'élément porteur 9 descend sous l'effet de la gravité. Dans le cas de la figure 4, l'axe 11 repose directement sur le tronçon descendant 18. Dans le cas de la figure 5, les roues 10A, 10B roulent sur les ailes latérales 8.

L'axe 11 peut être pourvu à proximité des roues 10A, 10B d'élargissements en diamètre 11A, 11B (figure 1). Dans ce cas, c'est l'élargissement 11A proche de la roue 10A qui est soulevé par la paroi de déraillement 22. Le sommet 24 de cette dernière est situé à un niveau différent selon qu'il existe ou non sur l'axe 11 des élargissements 11A, 11B. Ce niveau est déterminé pour que le déraillement expliqué plus loin se produise convenablement. En général, le sommet 24 de la paroi de déraillement 22 est sensiblement au même niveau que le sommet 3 du rail de guidage 2, comme le montre la figure 2.

Dans ce qui précède, on a admis pour la facilité de la description, que l'axe 11 est apparent et accessible entre les roues 10A, 10B. Il peut exister entre ces roues 10A, 10B, une entretoise contenant l'axe 11; cette entretoise peut être cylindrique avec un diamètre extérieur constant ou être pourvue des élargissements mentionnés plus haut. Le mot axe désigne donc aussi bien l'axe lui-même quand celui-ci est apparent que l'entretoise susceptible de le contenir.

Quand le dispositif de dérivation ne doit pas être utilisé pour faire dériver un élément porteur 9 qui arrive, le vérin 19 le fait pivoter en exerçant une poussée; l'axe 17 tourne dans son logement et l'extrémité libre de la lame d'aiguillage 13 vient occuper une position élevée, indiquée en trait mixte sur la figure 4, du fait de la courbure de cette lame. A cette position de repos de cette dernière, les éléments porteurs 9 circulent sur le rail guidage 2 sans être arrêtés.

**Revendications**

1. Dispositif de dérivation entre
a) un transporteur principal (1) ayant un rail de guidage (2) avec des ailes latérales de roulement (8A, 8B) de part et d'autre d'un sommet (3), une multitude d'organes de poussée (7) espacés entraînés de façon continue dans un sens déterminé (F), le long dudit rail de guidage (2), une multitude d'éléments porteurs (9) ayant un axe (11) et deux roues (8A, 8B) espacées pour rouler respectivement sur les ailes latérales (10A, 10B), lesdits éléments porteurs (9) étant poussés par les organes de poussée (7); et
b) au moins une ligne de dérivation ayant un tronçon descendant (18) aboutissant à un poste intermédiaire, ce dispositif comprenant une lame d'aiguillage (13) déplaçable entre une position d'activité et une position de repos, un axe (17) d'articulation de cette lame d'aiguillage (13), un moteur (19) de manoeuvre attelé à cette même lame d'aiguillage (13), caractérisé en ce que ladite lame d'aiguillage (13) comprend un corps incurvé (14) avec deux pistes latérales (15A, 15B) espacées par un écartement ayant la même valeur que l'écartement des ailes latérales (10A, 10B) du rail de guidage (2), se terminant par une extrémité libre destinée à reposer sur une aile latérale (8A) du rail de guidage (2) en position d'activité de la lame d'aiguillage (13), la piste latérale (15A) située alors en amont dans le sens (F) de déplacement des organes de poussée (7) présentant une première partie (20) reposant sur l'aile latérale (8A), une deuxième partie (21) longée du côté du rail de guidage (2) par une paroi de déraillement (22) dressée s'élevant progressivement jusqu'à un niveau sensiblement égal au niveau du sommet (3) du rail de guidage (2) et descendant ensuite au niveau de la piste latérale (13A), celle-ci ayant une troisième partie (23) située parallèlement à la piste latérale (15B) située en aval, au même niveau que cette dernière piste latérale (15B).

2. Dispositif selon la revendication 1, caractérisé en ce que la paroi de déraillement fait partie intégrante du corps (14) par lequel elle est prolongée à un niveau supérieur au niveau des pistes latérales (15A, 15B).

3. Dispositif selon la revendication 1, caractérisé en ce que la deuxième partie (21) de la piste latérale (15A) située en amont en position d'activité de la lame d'aiguillage (13) est supprimée substantiellement dans la région de la paroi de déraillement (22).

4. Dispositif selon la revendication 1, caractérisé en ce que la lame d'aiguillage (13) est munie, à l'opposé de son extrémité libre, de l'axe d'articulation (17) dans le prolongement du corps (14), cet axe (17) étant destiné à être logé dans le tronçon descendant (18) de la ligne de dérivation.

**Patentansprüche**

1. Ablenkvorrichtung Zwischen
a) einem Hauptförderer (1) mit einer beidseits eines Scheiteis (3) seitliche Rollflügel (8A, 8B) aufweisenden Führungsschiene (2), mit einer Mehrzahl von in Abständen liegenden, kontinuierlich entlang der Führungsschiene (2) in bestimter Richtung (F) angetriebenen Schuborganen (7) und mit einer Mehrzahl von Trägerelementen (9), die ihrerseits eine Achse (11) und zwei in gegenseitigen Abständen liegende Räder (10A, 10B) zum jeweiligen Abrollen auf den Seitlichen Rollflügeln (8A bzw. 8B) aufweisen, wobei die Trägerelemente (9) von den Schuborganen (7) vorgeschoben werden und
b) wenigstens einer Ablenkstrecke mit einem abwärts gerichteten Teilstück (18), das an eine Swischenstation angrenzt, wobei die Vorrichtung eine Zwischen einer Arbeits- und einer Ruhestellung verstellbare Weichenplatte (13), eine Drehachse (17) für die Weichenplatte (13) und einen an die Weichenplatte (13) angekoppelten Betätigungsmotor (19) umfaßt,
    dadurch gekennzeichnet,
    daß die Weichenplatte (13) einen gebogenen Körper (14) mit zwei seitlichen Radspuren (15A, 15B) umfaßt, die ihrerseits durch eine Entfernung getrennt sind, die gleich dem Abstand der Seitlichen Rollflügel (8A, 8B) der Führungsschiene (2) ist, und daß der Körper (14) in ein freies Ende ausläuft, das dazu dient, in Arbeitsstellung der Weichenplatte (13) auf einem seitlichen Rollflügel (8A) der Führungsschiene (2) aufzuruhen, wobei die seitliche Radspur (15A), die dann in Verschieberichtung (F) der Schuborgane (7) hinten liegt, einen ersten, auf dem seitlichen Flügel (8A) aufliegenden Teil (20) aufweist, ein zweiter, auf der Seite der Führungsschiene (2) an einer aufgerichteten Abgleiswand (22) entlang verlaufender Teil (21) sich allmählich auf ein Niveau erhebt, das im wesentlichen gleich dem Niveau des Scheitels (3) der Führungsschiene (2) ist, und anschließend auf das Niveau der seitlichen Radspur (15A) abfällt, und diese einen dritten Teil (23) hat, der parallel zur vorne gelegenen, seitlichen Radspur (15B) auf demselben Niveau wie diese letztere seitliche Radspur (15B) liegt.

2. Vorrichtung nach Anspruch 1, dadurch gekennzeichnet, daß die Abgleiswand einen integrierenden Teil des Körpers (14) bildet, durch den sie auf ein Niveau verlängert ist, welches über dem Niveau der seitlichen Radspuren (15A, 15B) liegt.

3. Vorichtung nach Anspruch 1, dadurch gekennzeichnet, daß der zweite Teil (21) der seitlichen Radspur (15A), der in Arbeitsstellung der Weichenplatte (13) oberhalb liegt, im Bereich der Abgleiswand (22) im wesentlichen weggelassen ist.

4. Vorrichtung nach Anspruch 1, dadurch gekennzeichnet, daß die Weichenplatte (13) gegenüber ihrem freien Ende in der Verlängerung des Körpers (14) mit der Drehachse (17) versehen ist, wobei diese Achse (17) dazu dient, in das abwärts gerichtete Teilstück (18) Ablenkstrecke eingefügt zu werden.

**Claims**

1. Apparatus for switching between
a) a main transporter (1) having a guide rail (2) with lateral rolling flanges (8A, 8B) on respective sides of a top portion (3), a multitude of spaced thrust members (7) entrained continuously in a given direction (F) along said guide rail (2), a multitude of carrier elements (9) having a spindle (11) and two wheels (8A, 8B) which are in spaced relationship for respectively rolling on the lateral flanges (10A, 10B), said carrier elements (9) being pushed by the thrust members (7): and
b) at least one switching line having a falling portion (18) terminating at an intermediate station, said apparatus comprising a switching blade (13) displaceable between an activity position and a rest position, a shaft (17) for pivotal movement of said switching blade (13), and an operating motor (19) coupled to said same switching blade (3) characterised in that said switching blade (13) comprises a curved body (14) with two lateral tracks (15A and 15B) which are spaced by a spacing of the same value as the spacing of the lateral flanges (10A, 10B) of the guide rail (2), terminating with a free end intended to rest on a lateral flange (8A) of the guide rail (2) in the activity position of the switching blade (13), the lateral track (15A) which is then disposed upstrem in the direction (F) of displacement of the thrust members (7) having a first portion (20) resting on the lateral flange (8A), a second portion (21) along which an upright derailment wall (22) extends on the side of the guide rail (2), the derailment wall rising progressively to a level substantially equal to the level of the top portion (3) of the guide rail (2) and then falling to the level of the lateral track (13A), the latter having a third portion (23) disposed parallel to the lateral track (15B) which is disposed downstream, at the same level as said last lateral track (15B).

2. Apparatus according to claim 1 characterised in that the derailment wall is an integral part of the body (14) by which it is extended to a level higher than the level of the lateral tracks (15A, 15B).

3. Apparatus according to claim 1 characterised in that the second portion (21) of the lateral track (15A) which is disposed upstream in the activity position of the switching blade (13) is suppressed substantially in the region of the derailment wall (22).

4. Apparatus according to claim 1 characterised in that the switching blade (13) is provided opposite its free end with the pivot shaft (17) extending in line with the body (14), said shaft (17) being intended to be housed in the falling portion (18) of the switching line.

Fig. 2

Fig. 1

Fig. 5

0 219 397

2 / 2

Fig. 3

Fig. 4